**Europäisches Patentamt**

**European Patent Office**

**Office européen des brevets**

(19)

(11) Veröffentlichungsnummer: **0 103 762**
**B1**

# (12) EUROPÄISCHE PATENTSCHRIFT

(45) Veröffentlichungstag der Patentschrift:
**28.01.87**

(21) Anmeldenummer: **83108211.0**

(22) Anmeldetag: **19.08.83**

(51) Int. Cl.⁴: **H 01 G 1/01**

(54) **Regenerierfähiger elektrischer Schichtkondensator.**

(30) Priorität: **25.08.82 DE 3231576**

(43) Veröffentlichungstag der Anmeldung:
**28.03.84 Patentblatt 84/13**

(45) Bekanntmachung des Hinweises auf die Patenterteilung:
**28.01.87 Patentblatt 87/5**

(84) Benannte Vertragsstaaten:
**DE FR GB IT SE**

(56) Entgegenhaltungen:
**EP - A - 0 000 210**
**DE - A - 2 843 581**

**THIN SOLID FILMS, Band 83, Nr. 2, September 1981,
Seiten 195-205, Elsevier Sequoia, Lausanne, gedruckt in
Holland; P.B. GHATE: "Aluminum alloy metallization for
integrated circuits"**

(73) Patentinhaber: **Siemens Aktiengesellschaft Berlin und
München, Wittelsbacherplatz 2, D-8000 München 2 (DE)**

(72) Erfinder: **Pachonik, Horst, Dipl.-Phys., Lindenring 135,
D-8028 Taufkirchen (DE)**

## Beschreibung

Die Erfindung betrifft einen regenerierfähigen elektrischen Schichtkondensator, bei dem auf einem isolierenden Trägermaterial abwechselnd Metallschichten aus Aluminium und durch Glimmpolymerisation hergestellte Dielektrikumsschichten übereinander angeordnet sind, wobei die Metallschichten der einen Polarität zu einer Seite und die Metallschichten der anderen Polarität zu der anderen Seite über die Dielektrikumsschichten überstehen.

Ein derartiger Kondensator ist aus der DE-A 28 43 581 bekannt. Die Metallschichten aus Aluminium werden dabei im Vakuum aufgedampft oder mittels Kathodenzerstäubung hergestellt und weisen beispielsweise eine Dicke von 30 nm auf.

Bei einem Kondensator, der z.B. je 100 Glimmpolymerisat- und Aluminiumschichten enthält, sind die Schichten stoffschlüssig miteinander verbunden. Die erforderlichen Begrenzungen der abwechselnd aufgebrachten Schichten werden durch aufliegende Masken erzeugt.

Um eine möglichst grosse Kapazität des Kondensators zu erhalten, ist es notwendig, die Dielektrikumsschichten sehr dünn auszugestalten, so dass ihre Dicke vorzugsweise 0,1 bis 0,5 μm beträgt. Damit diese dünnen Schichten regenerierfähig sind, wird als Belagmetall Aluminium verwendet, das als sogenanntes Ventilmetall ein isolierendes Oxid bildet.

Bei Lagerung derartiger Kondensatoren in erhöhter Temperatur (>70°C) treten nun unzulässige Abfälle im elektrischen Widerstand des Kondensators auf, die seine Funktion beeinträchtigen. Dieser Effekt tritt im allgemeinen bereits nach einigen Stunden, spätestens jedoch nach einigen Tagen, ein.

Die Zeitdauer in der dieser Isolationsbefall eintritt, verkürzt sich bei steigender Temperatur, und der Isolationsabfall zeigt zudem eine gewisse Abhängigkeit von der Zusammensetzung der Dielektrikumsschichten. Der Abfall wird auf ein Wandern der Aluminiumatome, d.h. eine Thermomigration, in die Dielektrikumsschichten zurückgeführt.

Aufgabe der Erfindung ist es, einen Kondensator der eingangs genannten Art anzugeben, bei dem ein Isolationsabfall durch Thermomigration nicht stattfindet.

Diese Aufgabe wird erfindungsgemäss dadurch gelöst, dass die Aluminiumschichten zur Verhinderung einer Thermomigration 1,5 bis 10 Gew.% Kupfer enthalten.

Vorzugsweise enthalten die Aluminiumschichten 2,5 bis 4 Gew.% Kupfer.

Die Kondensatoren nach der Erfindung weisen den Vorteil auf, dass ein temperatur- und zeitabhängiger Isolationsabfall selbst nach einigen tausend Stunden Lagerung bei erhöhter Temperatur nicht mehr stattfindet.

Unterhalb eines Kupferanteiles von 1,5 Gew.% wird die Thermomigration nur unvollständig unterbunden, während oberhalb von 10 Gew.% Kupfer die Metallschichten verspröden.

Es sind zwar bereits aus dem Stand der Technik (DE-B 27 03 636) regenerierfähige elektrische Kondensatoren bekannt, deren Metallschichten aus einer Legierung von Aluminium mit Kupfer bestehen, jedoch handelt es sich hierbei um Kondensatoren, die aus aufgewickelten metallisierten Kunststoffolien gebildet sind. Ein Isolationsabfall infolge Thermomigration ist an derartigen Kondensatoren nicht beobachtet worden, und die dort offenbarten Metallschichten aus einer Legierung von Aluminium mit Kupfer haben die Aufgabe, einen Kapazitätsabbau des Kondensators bei Betrieb in wasserdampf- und/oder sauerstoffhaltiger Atmosphäre zu unterbinden.

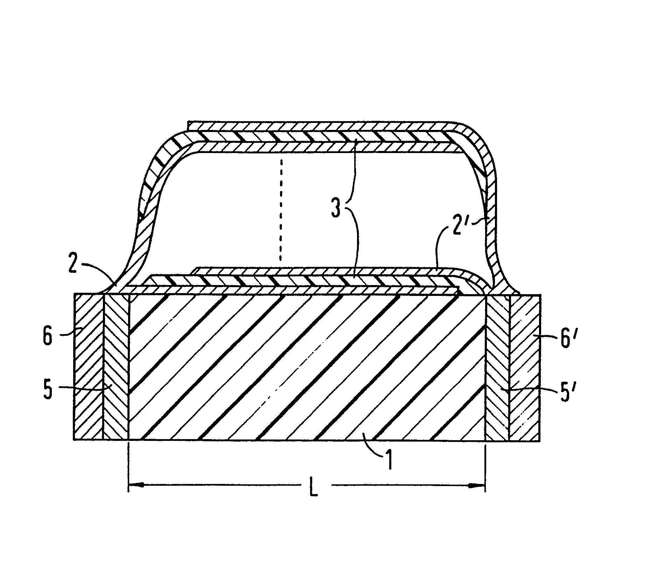

In der Zeichnung ist ein Ausführungsbeispiel eines Kondensators nach der Erfindung dargestellt. Auf einem isolierenden Trägermaterial 1 der Breite L sind abwechselnd Metallschichten 2 bzw. 2' und glimmpolymere Dielektrikumsschichten 3 angeordnet. Die Metallschichten 2 der einen Polarität sind mit auf dem Träger 1 stirnseitig angeordneten Kontaktschichten 5 und 6 und die Metallschichten 2' der anderen Polarität mit auf der anderen Stirnseite des Trägers 1 angeordneten Kontaktschichten 5' und 6' verbunden. Die Kontaktschichten 5, 6 bzw. 5', 6' dienen als Verbindung zu (in der Zeichnung nicht dargestellten) äusseren Anschlusselementen.

## Patentansprüche

1. Regenerierfähiger elektrischer Schichtkondensator, bei dem auf einem isolierenden Trägermaterial (1) abwechselnd Metallschichten (2, 2') aus Aluminium und durch Glimmpolymerisation hergestellte Dielektrikumsschichten (3) übereinander angeordnet sind, wobei die Metallschichten (2) der einen Polarität zu einer Seite und die Metallschichten (2') der anderen Polarität zu der anderen Seite über die Dielektrikumsschichten (3) überstehen, dadurch gekennzeichnet, dass die Aluminiumschichten (2, 2') zur Verhinderung einer Thermomigration 1,5 bis 10 Gew.% Kupfer enthalten.

2. Regenerierfähiger elektrischer Schichtkondensator nach Anspruch 1, dadurch gekennzeichnet, dass die Aluminiumschichten (2, 2') 2,5 bis 4 Gew.% Kupfer enthalten.

## Claims

1. A regenerative electrical film capacitor in which metal layers (2, 2') consisting of aluminium and dielectric layers (3) produced by glow polymerisation are arranged alternately, one above another, on an insulating carrier material (1), wherein the metal layers (2) of the one polarity project beyond the dielectric layers (3) at one side and the metal layers (2') of the other polarity project beyond the dielectric layers (3) at the other side, characterised in that the aluminium layers (2, 2') contain 1.5 to 10 weight % of copper to prevent thermal migration.

2. A regenerative electrical film capacitor as claimed in Claim 1, characterised in that the aluminium layers (2, 2') contain 2.5 to 4 weight % of copper.

## Revendications

1. Condensateur électrique régénérable à couches, dans lequel des couches métalliques (2, 2') formées d'aluminium et des couches de diélectrique (3) formées par polymérisation par effluve électrique sont superposées de façon alternée sur un matériau de support isolant (1), les couches métalliques (2) possédant une polarité faisant saillie d'un côté et les couches métalliques (2') possédant l'autre polarité faisant saillie de l'autre côté par rapport aux couches de diélectrique (3), caractérisé par le fait que les couches d'aluminium (2, 2') contiennent 1,5 à 10% en poids de cuivre de manière à empêcher une migration thermique.

2. Condensateur électrique régénérable à couches suivant la revendication 1, caractérisé par le fait que les couches d'aluminium (2, 2') contiennent 2,5 à 4% en poids de cuivre.